# EUROPEAN PATENT APPLICATION

(11) **EP 1 906 423 A1**
(43) Date of publication of application: **02.04.2008**
(21) Application number: 06121536.4
(22) Date of filing: 29.09.2006
(51) Int. Cl.: H01H 33/36

(54) **A drive system**

(71) Applicant: ABB Research Ltd, 8050 Zürich (CH)
(72) Inventor: Bosga, Sjoerd, SE-723 37, Västerås (SE)
(74) Representative: Löfgren, Jonas

(57) **Abstract**

The invention relates to a drive system (1) for controlling the movement of a moveable contact of a switching device for an electrical transmission or distribution system. The drive system comprises:
- an AC motor (5) for moving said moveable contact;
- a power converter (10);
- a capacitor-based energy storage unit (11); and
- a control unit (12) adapted to control the power converter so as to thereby control the operation of the motor.

The control unit is arranged to receive information as to a voltage value representing the output voltage of the energy storage unit or the input voltage of the power converter and adapted to adjust, directly or indirectly, a direct-axis current component of the motor current in dependence on said voltage value so as to thereby control field weakening of the motor in dependence on said voltage value.

The invention also relates to a switching device comprising such a drive system.

## Description

### FIELD OF THE INVENTION AND PRIOR ART

The present invention relates to a drive system according to the preamble of claim 1 for controlling the movement of a moveable contact of a switching device for an electrical transmission or distribution system. The invention also relates to a switching device for an electrical transmission or distribution system comprising the inventive drive system.

Circuit breakers for use in medium or high voltage electrical transmission or distribution systems have traditionally been operated by means of drive systems relying on the use of mechanical springs for controlling the movements of the moveable contact of the circuit breakers. However, such drive systems are associated with a number of drawbacks and drive systems comprising an electric motor for controlling the movement of a movable contact of a circuit breaker have been developed in order to overcome these drawbacks. Such motorized drive systems are for instance disclosed in US 6 531 841 B1, US 2003/0089683 A1 and WO 02/23572 A1.

A modern motorized drive system for a circuit breaker designed for use in an electrical transmission or distribution system may comprise:
- an AC motor for moving a moveable contact of the circuit breaker;
- a power converter electrically connected to the motor for outputting AC power to the motor;
- a capacitor-based energy storage unit connected to the power converter for supplying DC power to the power converter; and
- a control unit adapted to control the power converter so as to thereby control the operation of the motor.

The energy storage unit is to store sufficient electrical energy for making the motor execute one or more discrete movement operations where each movement operation implies a movement of the moveable contact in a desired direction. The energy storage unit of a medium or high voltage circuit breaker is normally designed to be capable of storing sufficient electrical energy for allowing the motor to execute a very quick sequence of consecutive movement operations for opening, closing and re-opening the circuit breaker in connection with a detected fault in the electricity supply network to which the circuit breaker is connected. This operating sequence is normally to be carried out within less than 0,5 seconds and the output voltage of the energy storage unit will normally drop during this operating sequence down to less than 50% of the initial output voltage, i.e. down to less than 50% of the output voltage of the energy storage unit when fully charged. Recharging of the energy storage unit normally takes long time (about 10-30 seconds) compared to the short duration of said operating sequence.

The motor, power converter and energy storage unit are costly parts of a motorized drive system for a medium or high voltage circuit breaker. The motor of the drive system requires an input voltage of a certain level in order to output the required torque for allowing each movement operation of said operating sequence to be performed in the desired manner. Typically, the motor is so designed that only 60-75% of the electrical energy stored in the energy storage unit can be used for operating the motor during the execution of the desired operating sequence. Designing the motor for lower voltage, so as to thereby increase the usability of the electrical energy stored in the energy storage unit, will increase the current required by the motor to output the required torque. The required current of the motor, in its turn, has a direct effect on the dimensioning and cost of the power converter, as the converter cost depends on maximum DC side voltage and maximum AC side current.

### SUMMARY OF THE INVENTION

The object of the present invention is to make possible a cost-effective design of a motorized drive system of the above-indicated type.

According to the invention, this object is achieved by a drive system having the features defined in claim 1.

The inventive drive system comprises:
- an AC motor for moving a moveable contact of a switching device for an electrical transmission or distribution system;
- a power converter electrically connected to the motor for outputting AC power to the motor;
- an energy storage unit, which is provided with one or several capacitors for storing electrical energy and which is electrically connected to the power converter for supplying DC power to the power converter, the energy storage unit being dimensioned to be capable of storing sufficient electrical energy for making the motor execute one or more discrete movement operations where each movement operation implies a movement of the moveable contact; and
- a control unit adapted to control the power converter so as to thereby control the operation of the motor.
According to the invention, the control unit is arranged to receive information as to a voltage value representing the output voltage of the energy storage unit or the input voltage of the power converter and adapted to adjust, directly or indirectly, the direct-axis current component for the motor current in dependence on said voltage value so as to thereby control field weakening of the motor in dependence on said voltage value. Hereby, it will be possible to control the direct-axis current component of the motor current so as to achieve a suitable field weakening of the motor and thereby a reduction of the required input voltage of the motor when so required due to a low voltage level of the energy storage unit. The field weakening of the motor makes it possible to achieve the required output torque of the motor at reduced motor voltage in connection with an ordered movement operation and a larger part of the electrical energy stored in the capacitor or capacitors of the energy storage unit may thereby be used for executing a desired movement operation or desired sequence of movement operations. Thus, with the inventive solution it will be possible to reduce the size of the energy storage unit, for instance by reducing the number of capacitors included therein, and thereby the cost of the drive system as compared to a corresponding drive system lacking a field weakening control of the above-indicated type.

According to an embodiment of the invention, the control unit is adapted to adjust, directly or indirectly, the direct-axis current component in dependence on said voltage value so as to achieve or enhance a field weakening of the motor when the voltage demand of the motor reaches or exceeds the available output voltage of the power converter. The control unit may alternatively be adapted to adjust, directly or indirectly, the direct-axis current component in dependence on said voltage value so as to achieve or enhance a field weakening of the motor when the output voltage of the energy storage unit is below a certain limit at the initiation of a movement operation or drops below a certain limit during the execution of a movement operation.

Further advantages as well as advantageous features of the inventive drive system will appear from the following description and the dependent claims.

The invention also relates to a switching device for an electrical transmission or distribution system provided with the inventive drive system. Said switching device is with advantage a medium or high voltage circuit breaker.

### BRIEF DESCRIPTION OF THE DRAWINGS

With reference to the appended drawings, a specific description of preferred embodiments of the invention cited as examples follows below. In the drawings:
- Fig 1: is a schematic block diagram illustrating a drive system according to the present invention; and
- Fig 2: is a partly cut lateral view of a circuit breaker provided with a schematically indicated drive system according to the invention.

### DETAILED DESCRIPTION OF PREFERRED EMBODIMENTS OF THE INVENTION

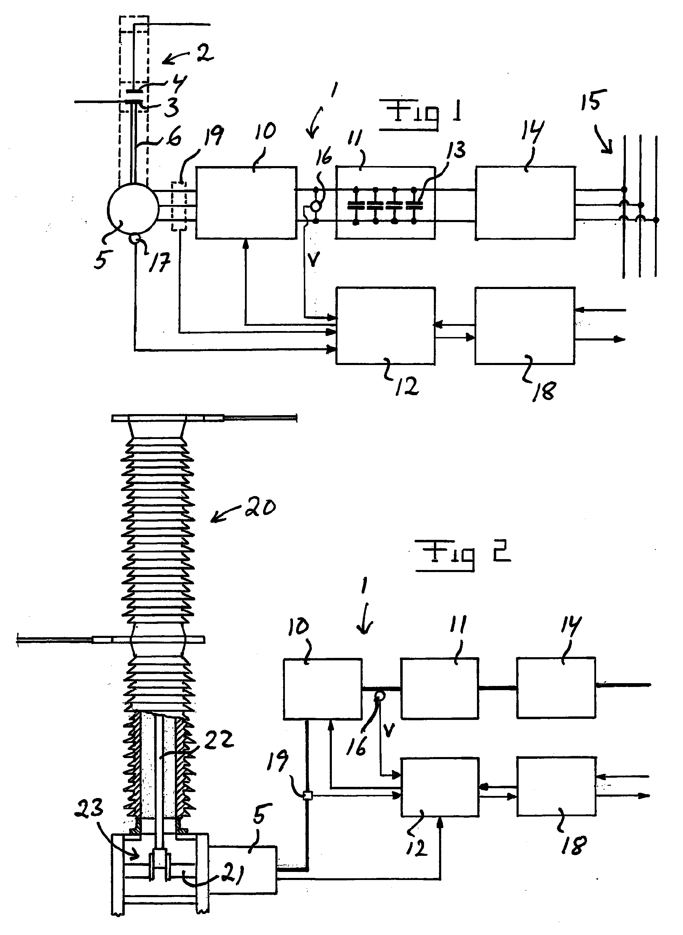

A drive system 1 according to an embodiment of the present invention is schematically illustrated in Fig 1. The drive system 1 is designed for controlling the movement of a moveable contact of an electric switching device for an electrical transmission or distribution system. Such a switching device is schematically indicated at 2 in Fig 1 and may for instance be a circuit breaker, a contactor, a disconnect switch or a grounding switch. The illustrated switching device 2 comprises a moveable contact 3 that is to be brought into electrical contact with another contact 4 of the switching device in order to close the switching device so as to allow electric current to flow through the switching device and that is to be brought out of electrical contact with the other contact 4 in order to open the switching device so as to interrupt the current path through the switching device.

The inventive drive system may also be used for controlling a moveable contact of a tap changer.

The drive system 1 comprises an AC motor 5 for moving said moveable contact 3 of the switching device 2. The motor 5 is operatively connected to the moveable contact 3 of the switching device 2 by a suitable linkage 6. The motor 5 may be a rotary motor having its output shaft connected to the moveable contact 3 via a motion transmitting mechanism that is arranged to convert rotary motion of the rotor of the motor into translatory motion of the moveable contact 3. Alternatively, the motor 5 may be a linear motor.

The motor 5 is suitably a permanent magnet motor, preferably with stator windings and a permanent magnet rotor. However, the motor 5 may alternatively be an induction motor or a synchronous reluctance motor.

The drive system 1 further comprises a power converter 10, which is electrically connected to the motor 5 for outputting AC power to the motor. A capacitor-based energy storage unit 11 is electrically connected to the power converter 10 for supplying DC power to the power converter. Thus, the required alternating current for actuating the motor 5 is provided by the power converter 10, which is designed to convert direct current supplied from the energy storage unit 11 into alternating current for actuating the motor. The power converter 10 is controlled by a control unit 12 to output the required motor current for making the motor perform a desired movement operation or a desired sequence of movement operations. Thus, the operation of the motor 5 is controlled by the control unit 12 via the power converter 10. The control unit 12 sends control signals to the power converter 10. Based on these control signals, the power converter 10 controls the motion of the rotor of the motor 5, such as the position, speed and/or acceleration of the rotor, and thereby the motion of the moveable contact 3 of the switching device 2.

The power converter 10 is suitably provided with converter valves having power semiconductor devices of turn-off type as switching elements. Said power semiconductor devices are preferably IGBTs, but may alternatively be FETs or the similar. By using a power converter with converter valves having such controllable switching elements, the torque applied to the rotor of the motor 5, and thereby the motion of the rotor and the moveable contact 3, may be controlled in a very accurate manner.

The energy storage unit 11 is provided with one or several capacitors 13 for storing electrical energy and is dimensioned to be capable of storing sufficient electrical energy for making the motor 5 execute one or more discrete movement operations where each movement operation implies a desired movement of the moveable contact 3. The energy storage unit may for instance be a capacitor bank comprising two or more interconnected capacitors. The energy storage unit may comprise conventional capacitors or supercapacitors.

The energy storage unit 11 is charged by a charger 14, which is connected to a power source 15, such as an electricity supply network or battery supply. In the embodiment illustrated in Fig 1, the charger 14 is connected to a power source 15 in the form of an electricity supply network.

Electrical energy may be fed in two directions between the energy storage unit 11 and the motor 5. Thus, regenerative braking of the motion of the rotor of the motor may take place, so that electrical energy is returned to the energy storage unit and thereby useable for the next movement operation. Such regeneration of electrical energy may also take place in other situations than braking, for instance when the moveable contact of the switching device is moved by other means than the motor and thereby acts on the rotor of the motor.

The size of the energy storage unit 11 is mainly determined by the electrical energy needed, without recharging, for executing a required movement operation or a required sequence of movement operations. However, it is not possible to use all electrical energy stored in the energy storage unit, due to the fact that a voltage is induced in the stator windings of the motor 5 by the rotating magnetic field caused by the rotor when rotating. To be able to control the motor currents, the power converter 10 must typically be able to supply a voltage to the motor that is higher than this induced voltage.

According to the invention, the control unit 12 is arranged to receive information as to a voltage value V representing the output voltage of the energy storage unit 11 or the input voltage of the power converter 10. The control unit 12 is adapted to adjust, directly or indirectly, the direct-axis current component I_{d} of the motor current in dependence on said voltage value V so as to thereby control field weakening of the motor in dependence on said voltage value, and thereby in dependence on the prevailing voltage level of the energy storage unit 11. The output voltage of the energy storage unit 11 or the input voltage of the power converter 10 may be measured by means of a suitable voltage sensor 16.

Field weakening of a motor by direct or indirect control of the direct-axis component I_{d} of the motor current is a motor control technique that is well known and often used for AC motors in other applications. Thus, field weakening of an AC motor is based on electrical principles that are well known to a person skilled in the art and these principles will therefore here not be explained in closer detail. Field weakening is a technique where the induced voltage in the stator windings, and thus the required motor voltage, is reduced by reducing the magnetic field in the motor. By reducing the voltage demand of the motor 5, the - voltage level of the energy storage unit 11 required for allowing the execution of a desired movement operation or a desired sequence of movement operations may be lowered, which implies that a larger part of the electrical energy stored in the energy storage unit 11 may be utilized for operating the motor 5.

For a permanent magnet motor, the magnetic field in the motor may be reduced by increasing the negative value of the direct-axis component I_{d} of the motor current. Field weakening will is this case result in a reduction of the required motor voltage, but also in an increase of the required motor current. Thus, an increased field weakening of the motor will result in a reduced voltage demand of the motor but, due to the increased motor current, to increased losses in the motor. Without field weakening, low supply voltage would limit the available torque or power of the motor 5. For the applications here in question, i.e. for controlling the movement of a moveable contact 3 of a switching device 2 for an electrical transmission or distribution system, limitation of the torque or power of the motor 5 has to be avoided, as the motion profile during the execution of a movement operation is prescribed by the application and very critical.

For an induction motor, the required magnetic field in the motor is created by a positive value of the direct-axis component I_{d} of the motor current. In this case, field weakening implies that the positive value of the direct-axis component I_{d} of the motor current is reduced to a suitable extent.

As indicated above, field weakening of a permanent magnet motor requires an increased stator current, which results in increased losses in the motor 5 and also in the power converter 10. Increased losses entail increased consumption of current and therefore a more rapid reduction of the voltage level of the energy storage unit 11. Thus, field weakening should only be applied when really necessary with respect to the voltage level of the energy storage unit.

The control unit 12 may be adapted to adjust, directly or indirectly, the direct-axis component I_{d} of the motor current in dependence on the above-indicated voltage value V so as to achieve or enhance a field weakening of the motor 5:
- when the voltage value V is below a certain limit at the initiation of a movement operation or drops below a certain limit during the execution of a movement operation; and/or
- when the voltage demand of the motor 5 reaches or exceeds the available output voltage of the power converter 10.

When the voltage value V is below a certain limit at the start of a movement operation, the control unit 12 may for instance be adapted to apply field weakening during all parts of the movement operation.

Alternatively, by monitoring the voltage value V during a movement operation, the control unit 12 may be adapted to activate field weakening at any moment during the movement operation, for instance as a function of the measured voltage value V and motor speed, or as a function of the voltage value V and the instantaneous output voltage of the power converter 10. This would improve the reliability of the drive system, as the field weakening will make it possible to successfully complete an ongoing movement operation if the voltage level of energy storage unit drops faster than expected, for instance due to capacitor ageing or high friction.

The control unit 12 is with advantage adapted to control the motor 5 based upon field oriented control (FOC). Alternatively, the control unit 12 may be adapted to control the motor 5 based upon direct torque control (DTC). FOC and DTC are both well known motor control techniques.

If field oriented control is applied, the control unit 12 comprises means for determining a desired quadrature-axis current component I_{q} and direct-axis current component I_{d} for the motor current. Thus, if field oriented control is applied, the control unit 12 is arranged to directly adjust the direct-axis current component I_{d} in dependence on the above-indicated voltage value V so as to thereby control field weakening of the motor in dependence on this voltage value.

If direct torque control is applied, the control unit 12 is adapted to control the magnetic field and the torque of the motor 5 without determining a desired quadrature-axis current component I_{q} and direct-axis current component I_{d} for the motor current. Thus, if direct torque control is applied, the control unit 12 is arranged to indirectly adjust the direct-axis current component I_{d} in dependence on the above-indicated voltage value V so as to thereby control field weakening of the motor in dependence on this voltage value.

In order to allow the operation of the motor 5 to be controlled in an accurate manner, the control unit 12 is adapted to receive or establish information as to the instantaneous position of the rotor of the motor. The control unit 12 may for instance be supplied with information as to said position from a position sensor 17, which is arranged to sense the position of the rotor. Alternatively, the control unit 12 may be adapted to establish the position of the rotor based on a suitable calculation model.

The control unit 12 is with advantage also adapted to receive information as to the current arriving to the motor 5. The control unit 12 may for instance be supplied with information as to said current from current measuring means 19, as indicated in Fig 1. The means for measuring the current arriving to the motor may alternatively be located in the power converter 10.

The information from the position sensor 17 and the current measuring means 19 may be used by the control unit 12 for the control of the power converter for obtaining a movement pattern of the rotor of the motor being exactly as desired. This information may also be used for checking the proper functioning of the drive system and/or the switching device.

In the illustrated embodiments, the control unit 12 is connected to an input/output unit 18, which receives operating commands for the operation of the drive system 1 and outputs status signals related to the status of the drive system 1 and the switching device 2.

The inventive drive system 1 is particularly suitable for operating a switching device in the form of a medium or high voltage circuit breaker, which preferably has a rated voltage of 10 kV-800 kV.

Such a circuit breaker 20 is schematically illustrated in Fig 2 together with an associated drive system 1. The energy storage unit 11 of a circuit breaker 20 of this type is normally dimensioned to be capable of storing sufficient electrical energy for allowing the motor 5 of the drive system 1 to execute a very quick sequence of consecutive movement operations for opening, closing and re-opening the circuit breaker in connection with a detected fault in the electricity supply network to which the circuit breaker is connected. This operating sequence is normally to be carried out within less than 0,5 seconds and in accordance with accurately defined motion profiles. In the illustrated embodiment, the output shaft 21 of the motor 5 of the drive system controls the movement of the moveable contact of the circuit breaker via an elongated operating rod 22, which is vertically displaced by rotating said output shaft 21. A motion transmitting mechanism 23 is arranged to convert rotary motion of the motor output shaft 21 into translatory motion of the operating rod 22.

The invention is of course not in any way restricted to the embodiments described above. On the contrary, many possibilities to modifications thereof will be apparent to a person with ordinary skill in the art without departing from the basic idea of the invention as defined in the appended claims.

## Claims

1. A drive system for controlling the movement of a moveable contact of a switching device for an electrical transmission or distribution system, the drive system (1) comprising:
- an AC motor (5) for moving said moveable contact;
- a power converter (10) electrically connected to the motor (5) for outputting AC power to the motor;
- an energy storage unit (11), which is provided with one or several capacitors (13) for storing electrical energy and which is electrically connected to the power converter (10) for supplying DC power to the power converter, the energy storage unit (11) being dimensioned to be capable of storing sufficient electrical energy for making the motor (5) execute one or more discrete movement operations where each movement operation implies a movement of the moveable contact; and
- a control unit (12) adapted to control the power converter (10) so as to thereby control the operation of the motor (5),
**characterized in that** the control unit (12) is arranged to receive information as to a voltage value (V) representing the output voltage of the energy storage unit (11) or the input voltage of the power converter (10) and adapted to adjust, directly or indirectly, the direct-axis current component of the motor current in dependence on said voltage value (V) so as to thereby control field weakening of the motor in dependence on said voltage value (V).

2. A drive system according to claim 1, **characterized in that** the control unit (12) is adapted to adjust, directly or indirectly, the direct-axis current component in dependence on said voltage value (V) so as to achieve or enhance a field weakening of the motor (5) when the voltage demand of the motor (5) reaches or exceeds the available output voltage of the power converter (10).

3. A drive system according to claim 1 or 2, **characterized in that** the control unit (12) is adapted to adjust, directly or indirectly, the direct-axis current component in dependence on said voltage value (V) so as to achieve or enhance a field weakening of the motor (5) when the voltage value (V) is below a certain limit at the initiation of a movement operation or drops below a certain limit during the execution of a movement operation.

4. A drive system according to any of claims 1-3, **characterized in that** the control unit (12) is adapted to control the motor (5) based upon field oriented control.

5. A drive system according to any of claims 1-4, **characterized in that** the motor (5) is a permanent magnet motor.

6. A drive system according to any of claims 1-5, **characterized in that** the energy storage unit (11) is a capacitor bank comprising two or more interconnected capacitors (13).

7. A drive system according to any of claims 1-6, **characterized in that** the energy storage unit (11) is charged by a charger (14), which is connected to a power source, such as an electricity supply network or battery supply.

8. A drive system according to any of claims 1-7, **characterized in that** the drive system (1) is adapted for controlling the movement of a moveable contact of a medium or high voltage circuit breaker.

9. A switching device for an electrical transmission or distribution system, **characterized in that** the switching device (2; 20) comprises a drive system (1) according to any of claims 1-8.

10. A switching device according to claim 9, **characterized in that** the switching device is a medium or high voltage circuit breaker (20), which preferably has a rated voltage of 10 kV-800 kV.
